# EUROPEAN PATENT APPLICATION

(11) **EP 4 693 704 A1**
(43) Date of publication of application: **11.02.2026**
(21) Application number: 24785333.6
(22) Date of filing: 05.04.2024
(51) Int. Cl.: H01M 50/543, H01M 50/552, H01M 50/564, H01M 50/102

(54) **BATTERY CELL**

(30) Priority: 06.04.2023 KR 20230045067
(71) Applicant: SK On Co., Ltd., Seoul 03161 (KR)
(72) Inventor: SHIN, Jae Sik, Daejeon 34124 (KR); JU, Seung Hoon, Daejeon 34124 (KR); BYUN, Jae Gyu, Daejeon 34124 (KR); SEO, Gi Jeong, Daejeon 34124 (KR)
(74) Representative: Stolmár & Partner Patentanwälte PartG mbB
(86) International application number: PCT/KR2024/004547
(87) International publication number: WO 2024/210636

(57) **Abstract**

A battery cell of the present disclosure comprises a case body forming an accommodating space with an open side, an electrode assembly accommodated in the accommodating space, a cap plate coupled to the case body to close the accommodating space, a current collecting member electrically connected to the electrode assembly and having a through hole formed therein, and a terminal including a terminal pin inserted into the through hole and a terminal head connected to the terminal pin. The current collecting member contacts a first recession of the terminal head and a second recession of the terminal pin.

## Description

### [Field]

This disclosure relates to a battery cell, specifically a battery cell including a terminal.

### [Background technology]

A battery cell may include an electrode assembly, a current collecting member connected to the electrode assembly, and a terminal connecting the current collecting member to an external device. The electrode assembly is a secondary battery that repeatedly performs charging and discharging.

The terminal and the current collecting member may be welded by welding. Here, the problem exists that the non-welded portion or the non-joined portion has high electrical resistance, making the electrical connection vulnerable. In this case, the flow of current concentrates at the welded portion, which is a region with relatively low electrical resistance, potentially causing heat to concentrate at the welded portion. Consequently, the resulting thermal stress may structurally weaken the welded portion.

### [Detailed Description of the Invention]

### [Technical Problem]

First, the present disclosure aims to provide a battery cell with improved stability.

Second, the present disclosure aims to increase the contact area between the current collecting member and the terminal.

Third, the present disclosure aims to reduce electrical resistance between the current collecting member and the terminal and minimize heat generation.

Fourth, the present disclosure aims to mechanically join the current collecting member and the terminal instead of using conventional welding methods.

Meanwhile, the battery cell according to this disclosure may be widely applied in the fields of electric vehicles, battery charging stations, energy storage systems, and other green technologies such as photovoltaics and wind power that utilize battery cells. Furthermore, the battery cell according to this disclosure may be used in eco-friendly mobility, including electric vehicles and hybrid vehicles, to prevent climate change by suppressing air pollution and greenhouse gas emissions.

### [Technical solutions]

A battery cell according to an embodiment of the present disclosure may comprise: a case including a case body with an open side and at least one cap plate coupled to the case body to close the open side; an electrode assembly accommodated within the case; and a terminal assembly coupled to the at least one cap plate; wherein the terminal assembly may include: a current collecting member electrically connected to the electrode assembly and having a through hole formed therein; a terminal including a terminal head positioned opposite to a direction in which the cap plate is located relative to the current collecting member and contacting the current collecting member and a terminal pin extending from the terminal head toward the cap plate and inserted into the through hole; a first recession formed in the terminal head, recessed away from the cap plate to surround the terminal pin, and contacting the current collecting member; and a second recession formed in the terminal pin, located adjacent to a portion of the terminal pin where the terminal pin and the terminal head are connected, recessed into the terminal pin, and contacting the current collecting member.

In an embodiment, the terminal head may include: a head center portion connected to the bottom end of the terminal pin; an inner connecting portion connected to the outer end of the head center portion and including the first recession; and an outer connecting portion connected to the outer end of the inner connecting portion.

In an embodiment, the current collecting member may be in contact with the inner connecting portion and the outer connecting portion.

In an embodiment, a vertical direction length of the first recession may be smaller than a vertical direction length of the periphery of the first recession.

In an embodiment, the first recession may be formed in a plurality at a position surrounding the outer end of the head center portion.

In an embodiment, a cross-sectional shape of the first recession in a vertical direction may be a triangular or a rounded triangular.

In an embodiment, the terminal pin may include the second recession connected to the top of the head center portion and a pin member connected to the top of the second recession.

In an embodiment, the current collecting member may be in contact with the inner connecting portion, the outer connecting portion, and the second recession.

In an embodiment, a horizontal direction length of the second recession may be smaller than a horizontal direction length of the pin member.

In an embodiment, the terminal pin further may include a dog point that is connected to the top of the pin member and protrudes vertically such that the horizontal direction length is reduced.

In an embodiment, the terminal pin and terminal head may be provided in a cylindrical shape, and the through hole is provided in a circular shape corresponding to the shape of the terminal pin, and an outer diameter of the terminal head may be equal to or larger than an inner diameter of the through hole.

In an embodiment, the current collecting member may be deformed to contact with the first recession and the second recession after the terminal is inserted into the current collecting member through the through hole.

In an embodiment, the current collecting member may further include a board-shaped plate including the through hole and a periphery of the through hole located within a predetermined reference distance from the through hole on the plate, wherein the periphery of the through hole may be in contact with the first recession and the second recession.

In an embodiment, a free end of the terminal pin may be located above the position of the cap plate relative to the current collecting member.

In an embodiment, the terminal assembly may further include an insulator for spacing the current collecting member and the terminal from the electrode assembly and the case.

A battery assembly according to another embodiment of the present disclosure may comprise: the battery cell; and an accommodating space for accommodating the battery cell.

### [Effect]

First, according to an embodiment of the present disclosure, a battery cell with improved stability may be provided.

Second, according to an embodiment of the present disclosure, the electrical resistance of the terminal may be improved, and the thermal behavior may be improved.

Third, according to an embodiment of the present disclosure, the terminal and the current collecting member may be joined using a mechanical method instead of welding.

Fourth, according to an embodiment of the present disclosure, the manufacturing process of the battery cell may be simplified and manufacturing costs may be reduced.

### [Description of the drawing]

FIG. 1a is a drawing illustrating a battery cell according to one embodiment. FIG. 1b is a drawing illustrating a terminal assembly according to an embodiment.
FIG. 2a and FIG. 2b are drawings illustrating the joining of a current collecting member and a terminal according to an embodiment.
FIG. 3a and FIG. 3b are cross-sectional views illustrating the joining of a current collecting member and a terminal according to an embodiment.
FIG. 4 is a plan view of a terminal according to an embodiment.

### [Embodiments]

The structural or functional descriptions of embodiments disclosed in this specification or application are provided merely as examples to illustrate embodiments of the technical concept of the present disclosure. Embodiments of the technical concept of the present disclosure may be implemented in various forms beyond the embodiments disclosed in this specification or application, and the technical concept of the present disclosure shall not be interpreted as being limited to the embodiments described herein or in the application.

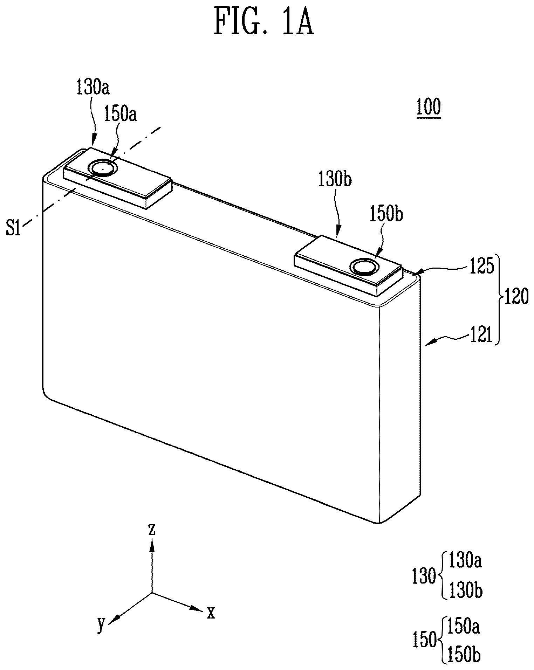

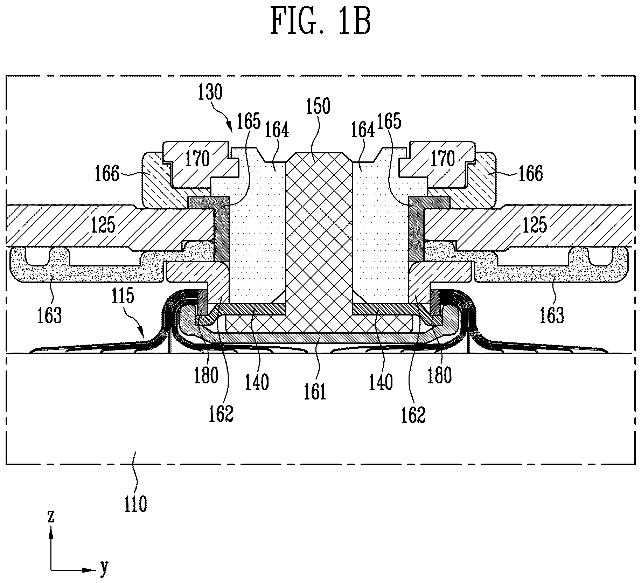

FIG. 1a is a drawing illustrating a battery cell according to one embodiment. FIG. 1b is a drawing illustrating a terminal assembly according to an embodiment. FIG. 1b shows a cross-section S1 of the terminal assembly of FIG. 1a.

Referring to FIGS. 1a and 1b, a battery cell 100 according to an embodiment may include an electrode assembly 110, a case 120, and a terminal assembly 130. For example, the battery cell 100 may be a lithium-ion battery, but is not limited thereto and may be modified to various types of batteries.

Referring to FIGS. 1a and 1b, the battery cell 100 according to the present disclosure includes a case 120 including a case body 121 with an open side and at least one cap plate 125 coupled to the case body 121 to close the open side, an electrode assembly 110 accommodated within the case 120, and a terminal assembly 130 coupled to at least one cap plate 125.

The terminal assembly 130 is electrically connected to the electrode assembly 110 and includes a current collecting member 140 with a through hole 145 formed therein, a terminal head 151 positioned opposite to a direction in which the cap plate 125 is located relative to the current collecting member 140 and contacting the current collecting member 140, and a terminal 150 including a terminal pin 155 extending from the terminal head 151 toward the cap plate 125 and inserted into the through hole 145, a first recession 153a formed in the terminal head 151 by being recessed away from the cap plate 125 to surround the terminal pin 155 and contacting the current collecting member 140, and a second recession 157 formed in the terminal pin 155, located adjacent to a portion of the terminal pin 155 where the terminal pin 155 and the terminal head 151 are connected, recessed into the terminal pin 155, and contacting the current collecting member 140.

The electrode assembly 110 may include electrodes, a separator, and lead tabs 115. The electrodes may include a positive electrode and a negative electrode. The separator may be an insulator having electrical insulating properties. The lead tabs 115 may include a positive electrode lead tab and a negative electrode lead tab. The positive electrode lead tab may be electrically connected to the positive electrode, and the negative electrode lead tab may be electrically connected to the negative electrode. For example, the electrode assembly 110 may be stacked in which electrodes (e.g., a negative electrode and a positive electrode) are arranged on both sides of the separator, and lead tabs are connected to the electrodes.

The electrode assembly 110 may be placed within an accommodating space of a case 120. The electrode assembly 110 may further include an electrolyte. For example, the electrolyte may be a material that enables the movement of lithium ions. The electrolyte may be a material in a liquid or solid state.

The case 120 may be a structure forming an accommodating space internally. For example, the case 120 may have a shape such as a hollow hexahedron or a hollow cylinder. The material of the case 120 may be aluminum or an aluminum alloy, but is not limited thereto and may be implemented using various materials.

The case 120 may include a case body 121 and at least one cap plate 125. For example, the cap plate 125 may be one or two.

The case body 121 may form an accommodating space with at least an open side.

The cap plate 125 may be coupled to the case body 121. For example, after an electrode assembly 110 is placed within the accommodating space inside the case body 121, the cap plate 125 may be coupled to the case body 121 to seal the accommodating space. In this case, the cap plate 125 may be coupled to the case body 121 using coupling methods such as bolts, welding, clamps, or protrusions.

The cap plate 125 may be coupled to the terminal assembly 130. For example, a hole may be formed in the cap plate 125. The terminal assembly 130 may be inserted into the hole in the cap plate 125, thereby coupling the cap plate 125 to the terminal assembly 130.

In an embodiment, the case body 121 may form an accommodating space with an open side. For example, the open side may be the top surface. The electrode assembly 110 may be inserted through the top surface and positioned within the accommodating space. Then, the cap plate 125 may be coupled to the case body 121 to seal the opened top surface of the accommodating space. In this case, two terminal assemblies 130 may be coupled to one cap plate 125.

In another embodiment, the case body 121 may form an accommodating space with two open sides. For example, the two open sides may be the top surface and the bottom surface. The electrode assembly 110 may be inserted through the top surface or the bottom surface and positioned within the accommodating space. Furthermore, two cap plates 125 may be coupled to the case body 121 to seal the opened top surface and bottom surface of the accommodating space. In this case, one terminal assembly 130 may be coupled to one cap plate 125.

The terminal assembly 130 is a structure for electrically connecting the electrode assembly 110 to an external device. The terminal assembly 130 may be distinguished as either a first terminal assembly 130a or a second terminal assembly 130b. Depending on the polarity of the lead tab 115 of the electrode assembly 110, one of the first terminal assembly 130a and second terminal assembly 130b may be a positive terminal assembly, and the other may be a negative terminal assembly. Similarly, the terminal 150 is distinguished as either the first terminal 150a or the second terminal 150b, and one of the first terminal 150a and the second terminal 150b may be a positive terminal, while the other may be a negative terminal.

The terminal assembly 130 may include a current collecting member 140 and a terminal 150.

The current collecting member 140 may be electrically connected to the electrode assembly 110. For example, the current collecting member 140 may be electrically connected to the lead tab 115 by contacting the lead tab 115.

The terminal 150 may be electrically connected to the current collecting member 140. Specifically, the terminal 150 may be in contact with the current collecting member 140, thereby providing a direct electrical connection. The current collecting member 140 and the terminal 150 may be conductive metals.

The terminal 150 may be electrically connected to an external device. The terminal 150 may be electrically connected to the electrode assembly 110 via the current collecting member 140. That is, the external device may be electrically connected to the electrode assembly 110 via the terminal 150 and the current collecting member 140. Here, the external device may be various devices such as another battery cell, a sensing device, or a battery management system.

The terminal 150 may be electrically connected to the current collecting member 140. Specifically, the terminal 150 may be in contact with the current collecting member 140, enabling a direct electrical connection. The current collecting member 140 and the terminal 150 may be made of a conductive metal. The terminal 150 may be electrically connected to the electrode assembly 110 via the current collecting member 140.

The fixed end of the terminal pin 155 is connected to the terminal head 151, and the free end of the terminal pin 155 may be located above the position of the cap plate 125 relative to the current collecting member 140. This is to ensure the terminal pin 155 protrudes beyond the cap plate 125.

Meanwhile, the terminal assembly 130 may further include insulators 161, 163, 165, 166 for spacing the current collecting member 140 and terminal 150 from the electrode assembly 110 and case 120.

Specifically, the terminal assembly 130 may further include a first insulator 161, an insulating socket 162, a second insulator 163, a rivet 164, a third insulator 165, a fourth insulator 166, a terminal plate 170, and a welded portion 180.

For example, the first insulator 161, insulating socket 162, second insulator 163, third insulator 165, and fourth insulator 166 may be structures having electrical insulating properties or high resistance characteristics. For example, the rivet 164, terminal plate 170, and welded portion 180 may be structures having electrical conductivity.

The first insulator 161 may be positioned between the electrode assembly 110 and the terminal 150. The side end of the first insulator 161 may be positioned between the lead tab 115 of the electrode assembly 110 and the current collecting member 140. The first insulator 161 may block a direct electrical connection between the lead tab 115 of the electrode assembly 110 and the terminal 150.

The insulating socket 162 is a structure for securing the rivet 164. The insulating socket 162 and the second insulator 163 can block a direct electrical connection between the lead tab 115 of the electrode assembly 110 and the cap plate 125.

The rivet 164 can secure the current collecting member 140 and the terminal 150. For example, the rivet 164 may be inserted into a space within the upper portion of the current collecting member 140, between the outer side of the terminal pin of the terminal 150 and the inner side of the insulating socket 162.

A third insulator 165 may block a direct electrical connection between the rivet 164 and the cap plate 125. For example, the third insulator 165 may be positioned between the rivet 164 and the cap plate 125. A fourth insulator 166 may block a direct electrical connection between the cap plate 125 and the terminal plate 170. For example, the fourth insulator 166 may be positioned between the cap plate 125 and the terminal plate 170.

A welded portion 180 may be formed between the lead tab 115 and the current collecting member 140 via welding. The welded portion 180 may electrically connect the lead tab 115 and the current collecting member 140 to each other.

The following describes in detail the method and structure by which the current collecting member 140 is joined to the terminal 150, with reference to the attached drawings.

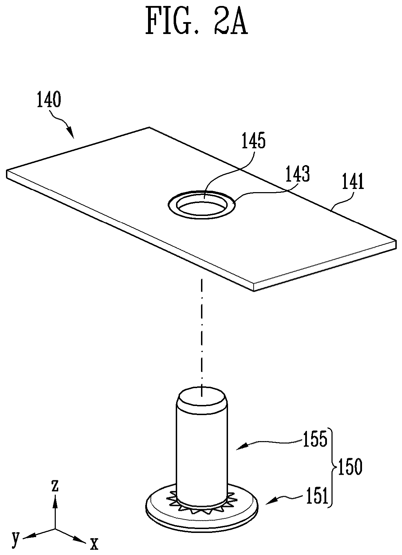

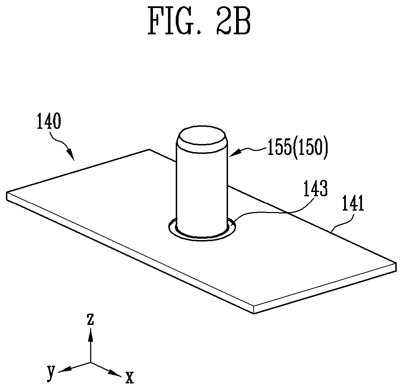

FIG. 2a and FIG. 2b are drawings illustrating the joining of a current collecting member and a terminal according to an embodiment. FIG. 2a shows the state before the current collecting member and the terminal are joined with each other, and FIG. 2b shows the state after the current collecting member and the terminal are joined with each other.

Referring to FIGS. 2a and 2b, the current collecting member 140 may be mechanically joined to the terminal 150. For example, the current collecting member 140 may be crimped to the terminal 150 while the terminal 150 is inserted into the through hole 145, thereby connecting to the terminal 150.

Preferably, the terminal pin 155 and terminal head 151 are provided in a cylindrical shape, and the through hole 145 may also be provided in a circular shape corresponding to the shape of the terminal pin 155. When the terminal pin 155 is inserted through the through hole 145, the terminal head 151 must contact the current collecting member 140, so the outer diameter of the terminal head 151 may be equal to or larger than the inner diameter of the through hole 145.

Specifically, the current collecting member 140 may have a through hole 145 formed therein. That is, the current collecting member 140 may include a through hole 145. The through hole 145 is a region for inserting the terminal 150 and may be an opened region.

In an embodiment, the current collecting member 140 may include a plate 141 and a periphery 143 of the through hole. The plate 141 may be an area contacting the terminal head 151 of the terminal 150. The periphery 143 of the through hole may be the area surrounding the through hole 145. For example, the periphery 143 of the through hole may be defined as the area within a reference distance from the through hole 145. The shape of the through hole 145 may be the same as the shape of the terminal pin 155. For example, the shape of the through hole 145 may be circular, but this is only one embodiment and may be modified into various shapes.

The terminal 150 may include a terminal head 151 and a terminal pin 155. The top of the terminal head 151 and the bottom of the terminal pin 155 may be connected to each other. In the embodiment, the terminal head 151 and the terminal pin 155 may be manufactured as a single part by methods such as forging or casting.

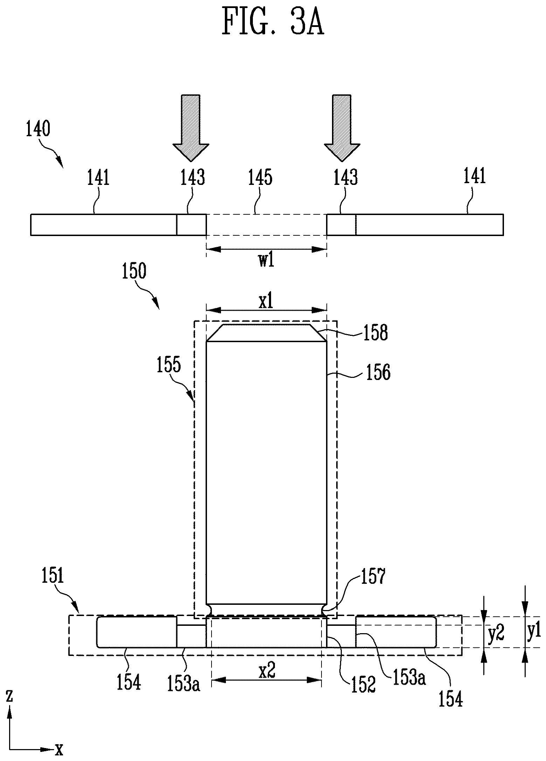

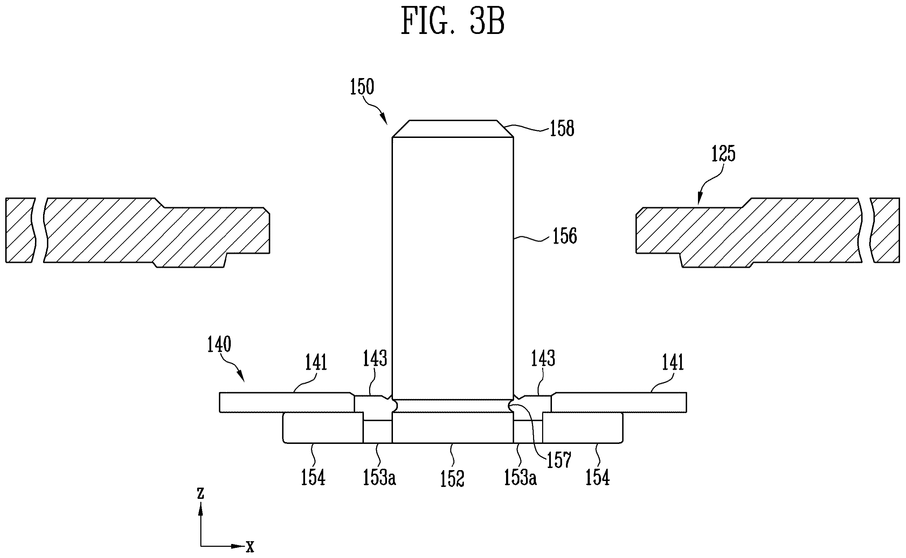

In the embodiment, the current collecting member 140 may be pressed so that the current collecting member 140 is aligned above the terminal 150 to allow the terminal pin 155 of the terminal 150 to be inserted into the through hole 145, and then the current collecting member 140 is moved downward. The current collecting member 140 can then be pressed to make close contact with the terminal 150. For example, after the terminal 150 is inserted into the current collecting member 140, the current collecting member 140 may be pressed by moving toward the terminal head 151, which is held stationary by an external force, thereby pressing it to fit closely against the terminal head 151. That is, the terminal 150 and the current collecting member 140 are joined mechanically, such that no gap may exist between the terminal 150 and the current collecting member 140. Specific details are described with reference to FIGS. 3a and 3b.

FIG. 3a and FIG. 3b are cross-sectional views illustrating the joining of a current collecting member and a terminal according to an embodiment. FIG. 3a shows the state before the current collecting member 140 and terminal 150 are joined with each other, and FIG. 3b shows the state after the current collecting member and terminal 150 are joined with each other.

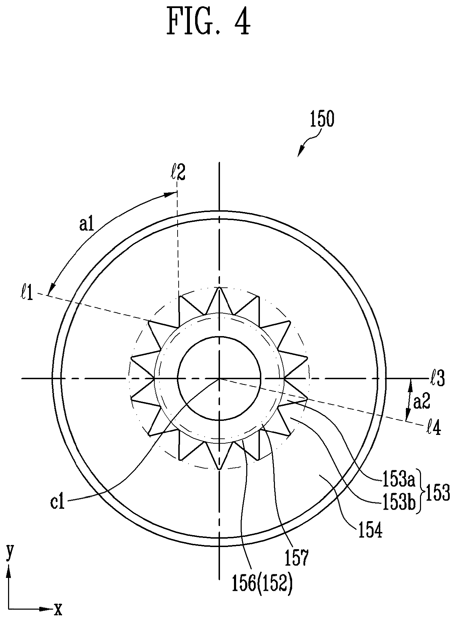

Referring to FIGS. 3a and 3b, in the embodiment, the terminal head 151 may include a head center portion 152, referring FIG. 4, an inner connecting portion 153, and an outer connecting portion 154.

The head center portion 152 may be connected to the bottom end of the terminal pin 155. For example, the upper end of the head center portion 152 may be connected to the bottom end of the terminal pin 155. The inner connecting portion 153 may be connected to the outer end of the head center portion 152. For example, the inner end of the inner connecting portion 153 may be connected to the outer end of the head center portion 152. The outer connecting portion 154 may be connected to the outer end of the inner connecting portion 153. For example, the inner end of the outer connecting portion 154 may be connected to the outer end of the inner connecting portion 153.

In an embodiment, the inner connecting portion 153 may include a first recession 153a. Here, the vertical direction length y2 of the first recession 153a may be smaller than the vertical direction length y1 of the peripheral of the first recession 153a. For example, the peripheral of the first recession 153a may be the head center portion 152 or the outer connecting portion 154.

That is, the terminal head 151 may include a first recession 153a that is recessed while surrounding the perimeter of the terminal pin 155. Ultimately, since one surface of the terminal head 151, located in the direction facing the busbar member 140, includes the recessed surface (not shown) of the first recession 153a, the terminal head 151 and the first recession 153a will come into contact with the busbar member 140.

Specifically, the current collecting member 140 will deform under pressure and come into contact with the recessed surface of the first recession 153a and at least a portion of the surface of the terminal head 151 facing the current collecting member 140.

That is, the plate 141 and the periphery 143 of the through hole may be positioned in a first state where they lie in the same plane. However, after pressing, the periphery 143 of the through hole may be positioned in a second state where it moves toward the terminal head 151 relative to the plate 141.

This is because, due to the pressing of the collecting member 140, the periphery 143 of the through hole is pressed and coupled toward the first recession 153a.

In the second state, the through hole 143 moves toward the terminal head 151 more than in the first state, and the periphery 143 of the through hole can come into contact with the first recession 153a.

In one embodiment, the terminal pin 155 may include a pin member 156, a second recession 157, and a dog point 158.

The pin member 156 may be connected to the top of the second recession 157. The pin member 156 may be the portion inserted into the through hole 145. For example, the shape of the pin member 156 may be a cylinder.

In an embodiment, the horizontal direction length w1 of the through hole 145 may be equal to or larger than the horizontal direction length x1 of the pin member 156. For example, the horizontal direction length w1, x1 may be a diameter.

The second recession 157 may be connected to the top of the head center portion 152 of the terminal head 151. For example, the bottom of the second recession 157 may be connected to the top of the head center portion 152, and the top of the second recession 157 may be connected to the bottom of the pin member 156.

In one embodiment, the horizontal direction length x2 of the second recession 157 may be smaller than the horizontal direction length x1 of the pin member 156. In the embodiment, the horizontal direction length x2 of the second recession 157 may be smaller than the horizontal direction length w1 of the through hole 145.

The dog point 158 may be the portion inserted into the through hole 145 before the pin member 156.

The dog point 158 may be connected to the top of the pin member 156. The dog point 158 may protrude vertically such that its horizontal direction length is reduced. Here, the horizontal direction length of the dog point 158 may be the diameter of the dog point 158.

In an embodiment, the current collecting member 140 may contact the inner connecting portion 153 and the outer connecting portion 154. In an embodiment, the current collecting member 140 may contact the second recession 157. For example, the periphery 143 of the through hole of the collecting member 140 may contact the first recession 153a and the second recession 157 of the inner connecting portion 153.

In a specific embodiment, referring to FIG. 3a, the current collecting member 140 may be aligned on top of the terminal 150. Furthermore, while the terminal pin 155 is inserted into the through hole 145, the periphery 143 of the through hole may be pressed to ensure the current collecting member 140 is in close contact with the terminal head 151. The periphery 143 of the through hole may be pressed downward by a press device.

That is, the current collecting member 140 may be deformed to contact with the first recession 153a and the second recession 157. Specifically, the current collecting member 140 further includes a plate 141 having a board shape including the through hole 145, and a periphery 143 of through hole located within a predetermined reference distance from the through hole 145 on the plate 141, wherein the periphery 143 of the through hole may be in contact with the first recession 153a and the second recession 157.

Subsequently, referring to FIG. 3b, the collecting member 140 may contact with the first recession 153a of the terminal head 151 and the second recession 157 of the terminal pin 155. For example, the periphery 143 of the through hole may be shaped to contact the first recession 153a and the second recession 157. That is, no gap may exist between the periphery 143 of the through hole and the first recession 153a, and no gap may exist between the periphery 143 of the through hole and the second recession 157. In this case, the plate 141 may contact the outer connecting portion 154.

Thus, according to the present disclosure, the mechanical bonding force may be enhanced and the electrical resistance may be improved by increasing the contact area between the current collecting member 140 and the terminal 150 using the first recession 153a and the second recession 157, which have a lower height than the periphery.

Meanwhile, referring to FIG. 1b and FIG. 3b, the relative positions of the cap plate 125, the current collecting member 140, and the terminal 150 may be understood. Therefore, it may be seen that the terminal 150 contacts the current collecting member 140 but is spaced apart from the cap plate 125.

FIG. 4 is a plan view of a terminal according to an embodiment. FIG. 4 shows a plan view of the terminal 150 in FIGS. 2a and 3a, viewed from the top downward.

Referring to FIG. 4, the terminal 150 may include a head center portion 152, an inner connecting portion 153, and an outer connecting portion 154 arranged on the bottom. The head center portion 152, inner connecting portion 153, and outer connecting portion 154 are arranged from the inner to the outer direction relative to the center portion c1 and may be connected to each other.

In the embodiment, the inner connecting portion 153 may include a first recession 153a having a vertical direction length smaller than the surrounding area and a flat portion 153b having the same vertical direction length as the surrounding area.

In the embodiment, the first recession 153a may be formed in a plurality at position surrounding the outer end of the head center portion 152. The number of first recession 153a may be varied in different implementations.

In the embodiment, a cross-sectional shape of the first recession 153a in the vertical direction may be a triangular or a rounded triangular. The rounded triangular may be defined as a triangle having curvature on the edges located within a reference distance from the vertex.

In the embodiment, the angle a1 between the edges 11 and 12 of adjacent first recession 153a may be within the range of 60 degrees or more and 75 degrees or less.

In the embodiment, the angle a2 between the groove line 13 and the ridge line 14 of the first recession 153a may be an angle within the range of 10 degrees or more and 15 degrees or less. Here, the groove line 13 may be a line connecting a vertex corresponding to the groove of the first recession 153a and the center portion c1. Here, the ridge line 14 may be a line connecting a vertex corresponding to the ridge of the first recession 153a and the center portion c1.

Meanwhile, the angles a1, a2 described above are merely one embodiment and may be implemented with various values.

The terminal 150 may further include a second recession 157 connected to the top of the head center portion 152 and a pin member 156 connected to the top of the second recession 157.

Meanwhile, the battery cell 100 according to this disclosure may be utilized in battery assemblies (not shown), such as a battery module, a battery pack, and an energy storage system. That is, the battery assembly may include the battery cell 100 and an accommodating space (not shown) for accommodating the battery cell 100. The accommodating space may be formed by a housing or frame.

For example, the accommodating space may accommodate a plurality of battery cells 100.

## Claims

1. A battery cell comprising:
a case including a case body with an open side and at least one cap plate coupled to the case body to close the open side;
an electrode assembly accommodated within the case; and
a terminal assembly coupled to the at least one cap plate;
wherein the terminal assembly includes:
a current collecting member electrically connected to the electrode assembly and having a through hole formed therein;
a terminal including a terminal head positioned opposite to a direction in which the cap plate is located relative to the current collecting member and contacting the current collecting member and a terminal pin extending from the terminal head toward the cap plate and inserted into the through hole;
a first recession formed in the terminal head, recessed away from the cap plate to surround the terminal pin, and contacting the current collecting member; and
a second recession formed in the terminal pin, located adjacent to a portion of the terminal pin where the terminal pin and the terminal head are connected, recessed into the terminal pin, and contacting the current collecting member.

2. The battery cell according to claim 1, wherein the terminal head includes:
a head center portion connected to the bottom end of the terminal pin;
an inner connecting portion connected to the outer end of the head center portion and including the first recession; and
an outer connecting portion connected to the outer end of the inner connecting portion.

3. The battery cell according to claim 2, wherein the current collecting member is in contact with the inner connecting portion and the outer connecting portion.

4. The battery cell according to claim 2, wherein a vertical direction length of the first recession is smaller than a vertical direction length of the periphery of the first recession.

5. The battery cell according to claim 2, wherein the first recession is formed in a plurality at a position surrounding the outer end of the head center portion.

6. The battery cell according to claim 2, wherein a cross-sectional shape of the first recession in a vertical direction is a triangular or a rounded triangular.

7. The battery cell according to claim 2, wherein the terminal pin includes the second recession connected to the top of the head center portion and a pin member connected to the top of the second recession.

8. The battery cell according to claim 7, wherein the current collecting member is in contact with the inner connecting portion, the outer connecting portion, and the second recession.

9. The battery cell according to claim 7, wherein a horizontal direction length of the second recession is smaller than a horizontal direction length of the pin member.

10. The battery cell according to claim 7, wherein the terminal pin further includes a dog point that is connected to the top of the pin member and protrudes vertically such that the horizontal direction length is reduced.

11. The battery cell according to claim 1, wherein the terminal pin and terminal head are provided in a cylindrical shape, and the through hole is provided in a circular shape corresponding to the shape of the terminal pin, and an outer diameter of the terminal head is equal to or larger than an inner diameter of the through hole.

12. The battery cell according to claim 1, wherein the current collecting member is deformed to contact with the first recession and the second recession after the terminal is inserted into the current collecting member through the through hole.

13. The battery cell according to claim 12, wherein the current collecting member further includes a board-shaped plate including the through hole and a periphery of the through hole located within a predetermined reference distance from the through hole on the plate,
wherein the periphery of the through hole is in contact with the first recession and the second recession.

14. The battery cell according to claim 1, wherein a free end of the terminal pin is located above the position of the cap plate relative to the current collecting member.

15. The battery cell according to claim 1, wherein the terminal assembly further includes an insulator for spacing the current collecting member and the terminal from the electrode assembly and the case.

16. A battery assembly comprising:
a battery cell of claim 1; and
an accommodating space for accommodating the battery cell.
